# EUROPEAN PATENT SPECIFICATION

(11) **EP 1 911 241 B1**
(45) Date of publication and mention of the grant of the patent: **03.10.2012**
(21) Application number: 06789176.2
(22) Date of filing: 02.08.2006
(51) Int. Cl.: H04L 29/06, H04L 12/22

(54) **METHOD FOR DEFENDING AGAINST DENIAL OF SERVICE ATTACKS IN IP NETWORKS BY TARGET VICTIM SELF-IDENTIFICATION AND CONTROL**
VERFAHREN ZUR VERTEIDIGUNG VOR DIENSTVERWEIGERUNGSANGRIFFEN IN IP-NETZWERKEN MITTELS ZIELOPFERSELBSTIDENTIFIZIERUNG UND STEUERUNG
PROCEDE DE DEFENSE CONTRE DES ATTAQUES DE DENI DE SERVICE DANS DES RESEAUX I, PAR AUTO-IDENTIFICATION ET COMMANDE ASSUREES PAR LA VICTIME CIBLE

(30) Priority: 05.08.2005 US 197842
(43) Date of publication of application: 16.04.2008
(73) Proprietor: Alcatel Lucent, 75007 Paris (FR)
(72) Inventor: GROSSE, Eric, Henry, Berkeley Heights, NJ 07922 (US); WOO, Thomas, Y., Short Hills, NJ 07078 (US)
(74) Representative: Cockayne, Gillian
(86) International application number: PCT/US2006/030063
(87) International publication number: WO 2007/035207

(56) References cited:
- WO-A2-02/25402
- WO-A2-03/001333
- WO-A2-03/005666
- US-A1- 2003 037 141
- US-A1- 2004 054 925

## Description

### Field of the Invention

The present invention relates generally to the field of computer security in packet based communications networks such as Internet Protocol (IP) networks, and in particular to a method and apparatus for defending against Denial of Service (DoS) attacks in such networks wherein the target victim itself recognizes the presence of such an attack, identifies the source of the attack, and requests control of the routing of malicious packets by its associated carrier network.

### Background of the Invention

Each day, many thousands of new "zombies" join the pool of hijacked PCs (Personal Computers) sending spam to e-mail users and launching Denial of Service (DoS) attacks against e-commerce sites, government resources, and other network infrastructure. In fact, it has been estimated that as many as 170,000 zombie machines are added to the Internet daily. Denial of service (DoS) attacks in particular can cause major service disruptions when limited resources need to be allocated to the attackers instead of to legitimate uses. Such attacks have been estimated to have resulted in over $26,000,000 of losses in calendar year 2004. The attacking machines are usually compromised zombie machines controlled by remote masters, and typically inflict damage by sending vast numbers of IP (Internet Protocol) packets across the Internet directed to the target victim of the attack. The culprits who instigate such attacks range from teenagers aiming to take down small business to international criminal organizations attempting to extort money from large corporations.

Presently, there are two commonly used approaches for defending against such Denial of Service attacks - one which is largely manual and one which is automated. The first approach requires manual identification of the existence of an attack by the end user (i.e., the target victim), followed by a manual (e.g., telephone) report of the attack to the victim's service provider (i.e., carrier), combined with a request that the carrier identify the source of the reported attack and instigate a protective barrier to prevent packets which are part of the attack from getting through the network to the victim. Most typically, such an approach will result in the carrier identifying the source of the offending packets, followed by its refusal to accept any packets from that source (or at least any packets from that source which are destined for the particular attack victim which identified and reported the existence of the attack).

A second approach for defending against such Denial of Service attacks provides a more automated process which requires the service provider to include sophisticated "packet washer" or "scrubber" filters through which each and every packet destined for the end user to be protected must pass. That is, changes are made to the Internet routing tables so that all of the given end user's traffic is routed through such a filter, which examines each packet in turn in an attempt to decide whether the packet is malicious or not. If it does not appear to be malicious, it is forwarded on to the end user, but if it does appear to be malicious, it is filtered out and discarded.

Each of these approaches however have significant limitations. The first approach requires substantial manual intervention and often may not be capable of addressing the problem of an attack until significant damage has already been done. And the second approach is unable to leverage application analysis of packets, since often, only the target is able to extract, and thus analyze, the data contents of the packet. (For example, if cryptographic protocols are used, it is typically only the ultimate destination of the packet that is capable of decoding the encoded packet data.) Moreover, a leveraged attack on a victim's application may not be based only on excessive bandwidth, but rather, may result from certain types of functional requests. Thus, a solution to the problem of Denial of Service attacks is needed wherein the attacks are promptly recognized, identified, and (preferably without manual intervention) stopped.

US 2004/054925 A1 (James K. Etheridge et al.), 18 March 2004, describes a method for protecting a host network from a flood-type denial of service attack. An attack is detected by performing statistical analysis of data packets in the network. A countermeasure can be initiated to protect the host network from the attack.

WO 02/25402 A2 (BBNT SOLUTIONS LLC, Robert J. Donaghey), 28 March 2002, describes a system which protects communication networks and devices against denial of service (DoS) attacks. A service provider receives a signal indicating that a DoS attack has been detected, receives one or more packets intended for a victim device, and transmits the one or more packets to a triage device. The triage device determines whether each of the one or more packets is part of the DoS attack and forwards only packets that are deemed unrelated to the DoS attack to the victim device.

### Summary of the Invention

We have recognized that while the best place to recognize the existence of a Denial of Service attack is at the target victim (who has the ultimate motivation to identify and address attacks on itself), the best place to defend against the attack is within the network (i.e., in the carrier's network). As such, in accordance with the principles of the present invention, the benefits of each of the two aforementioned prior art approaches may be advantageously realized without the corresponding disadvantages. In particular, the present invention provides a method for defending against a Denial of Service attack wherein a target victim of an attack recognizes the existence of an attack, identifies the source of the attack, and automatically instructs its carrier network to limit transmission of packets from the identified source to the target victim.

More specifically, the present invention provides a method and apparatus for defending against Denial of Service attacks by a target victim which is provided service by an Internet Protocol (IP) based carrier network, according to claim 1.

### Brief Description of the Drawings

Figure 1 shows a network environment in which an apparatus for defending against Denial of Service attacks in accordance with an illustrative embodiment of the present invention is employed.
Figure 2 shows a flow chart of a method for defending against Denial of Service attacks in accordance with an illustrative embodiment of the present invention.

### Detailed Description of the Illustrative Embodiments

In accordance with an illustrative embodiment of the present invention, a Zombie Attack Processor (hereinafter, "Zapper") provides a new type of security device that allows the victim of a Denial of Service attack to "push back" by denouncing attackers to its carrier, which will, in response, update a table of source/destination IP address pairs which are to be blocked. More specifically, upon recognizing that an attack is taking place, the victim will identify one or more pairs of source and destination IP addresses which are specified in packets deemed to be a part of the attack, and communicate those IP address pairs to its carrier for blocking.

Note that, in accordance with certain illustrative embodiments of the present invention, the attacker (*i.e*., the identified source IP address or addresses) need not be cut off completely from the network, but rather may be prohibited only from sending packets to the victim (*i.e*., the identified destination IP address or addresses). This may be advantageous, particular in the case where the identified source IP address or addresses represent a legitimate user which has been taken over (*i.e*., a zombie) for the given attack against the victim. Thus, the owner of the taken over machine may continue to use the system for legitimate purposes, while the attack being perpetrated on the victim (unbeknownst to the legitimate user) is nonetheless advantageously thwarted. Moreover, note that the technique in accordance with such illustrative embodiments of the present invention also advantageously provides protection from overly zealous identification of attackers by a given victim. Since, in accordance with the principles of the present invention, the identification of an attack is left to the discretion of the apparent victim, it is clearly advantageous that *only* traffic to the given victim is being cut off or restricted.

Advantageously, the denunciation protocol could include security signatures so that the Zapper infrastructure itself could not be used to launch a Denial of Service attack. Moreover, the protocol might advantageously make use of redundant connections to the carrier network, as well as redundant UDP (User Datagram Protocol), to ensure delivery even under congested network conditions. (UDP is an IP communications protocol which is fully familiar to those of ordinary skill in the art.) Advances in network processors and memories enable such a defense to be scaled to potentially large numbers of attackers - far beyond the capacity of earlier routers - advantageously without requiring manual intervention by either the victim or the carrier and hence capable of an extremely timely response.

In accordance with various illustrative embodiments of the present invention, such a Zapper filtering engine may be implemented as either a stand-alone box included in the carrier network, or, alternatively, as a line card incorporated into otherwise conventional network elements which are already present in the network. Moreover, in accordance with certain illustrative embodiments of the present invention, the Zapper filter may be advantageously deployed by the carrier within the network at a location relatively close to the attack origins, or it may be initially placed to advantageously defend premium customers from attack.

In accordance with various illustrative embodiments of the present invention, IP address pair entries to be blocked may either time out (*i.e*., be automatically removed after a predetermined elapsed period of time), or, alternatively, may be cleared by explicitly issued reprieves. In this manner, the network will advantageously return to a clean state without the need for the use of garbage collection algorithms. Illustratively, denouncers (*i.e*., customers of the carrier network who are enabled to identify and protect against attacks) may, for example, be given a limited number of "chits" (source/destination IP address pairs to be entered and blocked) - say, for example, on the order of a hundred thousand - which may, for example, be based proportionally on the amount of business that the given customer does with the given service provider (*i.e*., carrier).

Moreover, in accordance with certain illustrative embodiments of the present invention, network diagnosis may be advantageously provided by having the illustrative Zapper return an ICMP (Internet Control Message Protocol, fully familiar to those of ordinary skill in the art) unreachable message with, for example, some predetermined probability whenever a packet is dropped as having been identified as comprising a blocked source/destination IP address pair. Such an error return may, in accordance with one illustrative embodiment of the present invention, include a code which will enable the sender of the blocked packet to query a database for details regarding who placed the blocking request on such packets and, possibly, the reasons for such a request.

And, in accordance with certain illustrative embodiments of the present invention, supplementary tools might be advantageously provided as well. For example, such tools might include Internet server plug-ins for recognition of leveraged Denial of Service attacks, links to various IDS systems (Intrusion Detection Systems), databases for network diagnosis (see discussion above), and methods for providing guidance for placement of Zapper functionality within a given carrier's infrastructure. Illustrative embodiments of the present invention which provide various ones of these supplementary tools will be obvious to those skilled in the art in light of the disclosure herein.

Note that the operation of the Zapper filtering mechanism according to certain illustrative embodiments of the present invention is similar to that of a conventional firewall, except that it operates based on a potentially large number (e.g., millions) of very simple rules. In particular, the Zapper rules may be expressed in the form "if the source IP address of a given packet is a.b.c.d and the destination IP address of the packet is w.x.y.z, then block (i.e., drop) the packet."

And in accordance with other illustrative embodiments of the present invention, rather than prohibiting the transmission of packets with a given source and destination IP address, the Zapper filter may de-prioritize such packets. That is, the filtering mechanism may either assign such packets a low routing priority or enforce a packet rate limit on such packets. In either case, packets with the given source and destination IP addresses will be unable to have a significant effect on traffic and thus will no longer result in a successful Denial of Service attack on the victim.

In accordance with various illustrative embodiments of the present invention, attack detection may be advantageously recognized by the victim by algorithms of varying degrees of simplicity or sophistication, many of which will be obvious to those skilled in the art. For example, in accordance with one illustrative embodiment of the invention, application logs may be examined and an attack may be identified based solely on the presence of very high traffic levels (*e.g*., high packet rates) from either a single identified source or a plurality of identified sources. (Note that this is one conventional method of identifying the presence of a Denial of Service attack and will be familiar to those of ordinary skill in the art.)

In accordance with another illustrative embodiment of the invention, however, application based analysis of packet contents may be performed to identify packets or sequences of packets having a suspicious nature, such as, for example, recognizing that there have been frequent database searches for non-existent database elements; recognizing that there have been multiple requests apparently from a human being which occur at a higher rate than a person could initiate them; identifying syntactically invalid requests; and identifying suspicious amounts of traffic at particularly sensitive times in the operation of a normally occurring activity. (An example of the latter class of suspicious packets might be identified, for example, if a stock trading web site notices particularly disruptive traffic at a sensitive time during an imminent stock transaction.) And in accordance with other illustrative embodiments of the invention, a number of different indicia of a possible attack, which may include, for example, one or more of the above described situations, may be advantageously combined in a more sophisticated analysis to identify the presence of an attack.

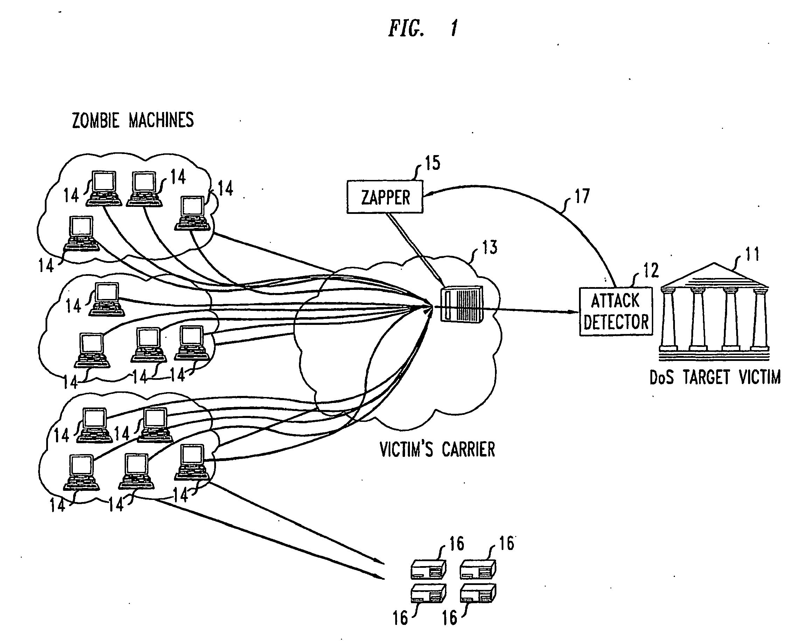

Figure 1 shows a network environment in which an illustrative apparatus for defending against Denial of Service attacks in accordance with an illustrative embodiment of the present invention is employed. The figure shows target victim 11 (which may, for example, be a bank or other financial institution). Note that target victim 11 is assumed to have one or more IP addresses (not shown) associated therewith. Also associated with target victim 11, in accordance with the principles of the present invention, is attack detector 12, which operates in accordance with an illustrative embodiment of the present invention to determine that a Denial of Service attack is being perpetrated on target victim 11.

Carrier network 13, the network carrier which provides service to target victim 11, receives IP packets from various sources and transmits them to target victim 11. As is shown in the figure, the IP packets being transmitted to the victim are, in fact, associated with a Denial of Service attack thereon, and are being sent by a large number of zombie machines 14. Carrier network 13 also includes zapper 15, which advantageously defends against Denial of Service attacks in accordance with an illustrative embodiment of the present invention.

More specifically, in operation and in accordance with the illustrative embodiment of the present invention, attack detector 12, upon determining that a Denial of Service attack is being perpetrated on target victim 11, transmits one or more source/destination IP address pairs to zapper 15, which causes carrier network 13 to limit (e.g., block) the transmission of IP packets whose source IP address and destination IP address match those of any of the transmitted source/destination IP address pairs, thereby limiting (or eliminating) the Denial of Service attack from zombies 14 to attack victim 11. Note that attack detector 12 advantageously transmits the source/destination IP address pairs with use of redundant connection 17. Note also that IP packets transmitted from zombies 14 to unrelated servers 16 are advantageously not affected.

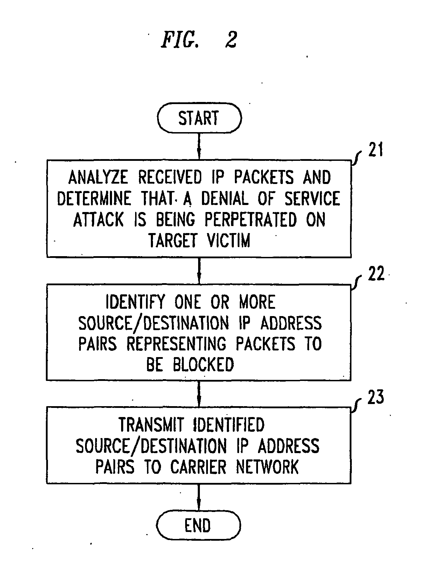

Figure 2 shows a flow chart of a method for defending against Denial of Service attacks in accordance with an illustrative embodiment of the present invention. The illustrative method of Figure 2 is performed at a target victim and begins (as shown in block 21) by determining that a Denial of Service attack is being perpetrated thereupon based on an analysis of received IP packets. Then (as shown in block 22), one or more source/destination IP address pairs are identified as being representative of IP packets that should be blocked in order to thwart the Denial of Service attack. (Illustratively, the source IP addresses are those of the attacking "zombie" machines and the destination IP addresses are those associated with the target victim itself.) Finally (as shown in block 23), the identified source/destination IP address pairs are transmitted to the victim's carrier network to enable the carrier network to block transmission of IP packets having matching source and destination IP addresses.

### Addendum to the detailed description

It should be noted that all of the preceding discussion merely illustrates the general principles of the invention. It will be appreciated that those skilled in the art will be able to devise various other arrangements, which, although not explicitly described or shown herein, embody the principles of the invention, and are included within its scope. For example, although the present invention has been described specifically with respect to Internet Protocol (IP) networks, it will be obvious to those of ordinary skill in the art that the particular communications protocol used is not relevant to the principles of the present invention, and, therefore, the present invention can be used in an identical manner in the context of any data packet based network in which packets having source and destination addresses associated therewith are transmitted through the network.

In addition, all examples and conditional language recited herein are principally intended expressly to be only for pedagogical purposes to aid the reader in understanding the principles of the invention and the concepts contributed by the inventor to furthering the art, and are to be construed as being without limitation to such specifically recited examples and conditions. Moreover, all statements herein reciting principles, aspects, and embodiments of the invention, as well as specific examples thereof, are intended to encompass both structural and functional equivalents thereof. It is also intended that such equivalents include both currently known equivalents as well as equivalents developed in the future - i.e., any elements developed that perform the same function, regardless of structure.

## Claims

1. A fully automated method for defending against Denial of Service attacks against a target victim (11), wherein the target victim is provided service by an Internet Protocol (IP) based carrier network (13) which transmits JP packets thereto, the target victim having one or more IP addresses associated therewith, the method comprising the step of
determining (21) that a Denial of Service attack is being perpetrated upon said target victim based on an analysis of IP packets received from one or more source IP addresses, the method **CHARACTERIZED by** being implemented at the target victim, and further comprising the steps of:
identifying (22) one or more pairs of IP addresses, each of said pairs of IP addresses comprising a source IP address and a destination IP address, wherein the source IP address is one of said source TP addresses from which one of said IP packets has been received, and wherein said destination IP address is one of said IP addresses associated with the target victim: and
transmitting (17, 23) to said carrier network said one or more identified pairs of IP addresses to enable the carrier network to limit transmission of IP packets having a source JP address and a destination IP address equal to the source IP address and the destination IP address comprised in one of said identified pairs of IP addresses which been transmitted thereto.

2. The method of claim 1 wherein said step of determining that a Denial of Service attack is being perpetrated upon said target victim comprises determining that a packet rate of said IP packets received from said one or more source IP addresses exceeds a predetermined threshold.

3. The method of claim 1 wherein said step of determining that a Denial of Service attack is being perpetrated upon said target victim comprises determining that a plural number of said IP packets received from said one or more source IP addresses comprise requests to perform a database search for a non-existent database element, wherein a rate of reccipt of said plural number of said TP packets which comprise such requests to perform a database search for a non-existent database element exceeds a predetermined threshold.

4. The method of claim 1 wherein said step of determining that a Denial of Service attack is being perpetrated upon said target victim comprises determining that a plural number of said IP packets received from said one or more source IP addresses comprise requests purportedly from a human being, wherein a rate of receipt of said plural number of said IP packets which comprise requests purportedly from a human being exceeds a predetermined threshold.

5. The method of claim 1 wherein said step of determining that a Denial of Service attack is being perpetrated upon said target victim comprises determining that a plural number of said IP packets received from said one or more source IP addresses comprise syntactically invalid requests, wherein a rate of receipt of said plural number of said IP packets which comprise syntactically invalid requests exceeds a predetermined threshold.

6. The method of claim 1 wherein said step of determining that a Denial of Service attack is being perpetrated upon said target victim comprises determining that a plural number of said IP packets received from said one or more source IP addresses are received during sensitive operations of said target victim at a rate which exceeds a predetermined threshold.

7. The method of claim 1 wherein said step of determining that a Denial of Service attack is being perpetrated upon said target victim comprises determining that at least two of a predetermined set of conditions is satisfied, wherein the set of conditions includes two or more of:
determining that a packet rate of said IP packets received from said one or more source IP addresses exceeds a predetermined threshold;
determining that a plural number of said IP packets received from said one or more source IP addresses comprise requests to perform a database search for a non-existent database element, wherein a rate of receipt of said plural number of said IP packets which comprise such requests to perform a database search for a non-existent database clement exceeds a predetermined threshold;
determining that a plural number of said IP packets received from said one or more source IP addresses comprise requests purportedly from a human being, wherein a rate of receipt of said plural number of said IP packets which comprise requests purportedly from a human being exceeds a predetermined threshold;
determining that a plural number of said IP packets received from said one or more source IP addresses comprise syntactically invalid requests, wherein a rate of receipt of said plural number of said IP packets which comprise syntactically invalid requests exceeds a predetermined threshold; and
determining that a plural number of said IP packets received from said one or more source IP addresses are received during sensitive operations of said target victim at a rate which exceeds a predetermined threshold.

8. The method of claim 1 wherein said step of transmitting to said carrier network said one or more identified pairs of IP addresses comprises transmitting said one or more identified pairs of IP addresses to said carrier network with use of a security signature.

9. The method of claim 1 wherein said step of transmitting to said carrier network said one or more identified pairs of IP addresses comprises transmitting said one or more identified pairs of IP addresses to said carrier network with use of a redundant connection to said carrier network.

10. The method of claim 1 wherein said step of transmitting to said carrier network said one or more identified pairs of IP addresses comprises transmitting said one or more identified pairs of IP addresses to said carrier network with use of a redundant communications protocol.

## Patentansprüche

1. Vollautomatisiertes Verfahren zur Verteidigung vor Dienstverweigerungsangriffen gegen ein Zielopfer (11), wobei dem Zielopfer ein Dienst über ein Intemetprotokoll, IPbasiertes Trägernetzwerk (13), welches IP-Pakete an das Zielopfer überträgt, bereitgestellt wird, wobei das Zielopfer eine oder mehrere mit ihm assoziierte IP-Adressen hat, wobei das Verfahren den folgenden Schritt umfasst:
Ermitteln (21), dass ein Dienstverweigerungsangriff auf das besagte Zielopfer ausgeübt wird, auf der Basis einer Analyse von von einer oder mehreren Quell-IP-Adressen empfangenen IP-Paketen, wobei das Verfahren **dadurch GEKENNZEICHNET ist, dass** es an dem Zielopfer implementiert wird, und weiterhin die folgenden Schritte umfassend:
Identifizieren (22) eines oder mehrerer IP-Adressenpaare, wobei ein jedes der besagten IP-Adressenpaare eine Quell-IP-Adresse und eine Ziel-IP-Adresse umfasst, wobei die Quell-IP-Adresse eine der besagten Quell-IP-Adressen, von welcher eines der besagten IP-Pakete empfangen wurde, ist, und wobei die besagte Ziel-IP-Adresse eine der besagten mit dem Zielopfer assoziierte IP-Adresse ist; und
Übertragen (17, 23) des besagten mindestens einen oder der besagten mehreren identifizierten IP-Adressenpaare an das besagte Trägernetzwerk, um das Trägernetzwerk zu befähigen, die Übertragung von IP-Paketen mit einer Quell-IP-Adresse und einer Ziel-IP-Adresse, welche der in einem der besagten identifizierten IP-Adressenpaare, welches an dieses übertragen wurde, enthaltenen Quell-IP-Adresse und Ziel-IP-Adresse entsprechen, zu beschränken.

2. Verfahren nach Anspruch 1, wobei der besagte Schritt des Ermittelns, dass ein Dienstverweigerungsangriff auf das besagte Zielopfer ausgeübt wird, das Ermitteln, dass eine Paketrate der besagten von der einen oder von den besagten mehreren Quell-IP-Adressen empfangenen IP-Pakete einen vorbestimmten Grenzwert überschreitet, umfasst.

3. Verfahren nach Anspruch 1, wobei der besagte Schritt des Ermittelns, dass ein Dienstverweigerungsangriff auf das besagte Zielopfer ausgeübt wird, das Ermitteln, dass eine Mehrzahl der besagten von der besagten einen oder den besagten mehreren Quell-IP-Adressen empfangenen IP-Pakete Anforderungen für das Ausführen einer Suche nach einem nicht existierenden Datenbasis-Element in der Datenbasis enthalten, umfasst, wobei eine Empfangsrate der besagten Mehrzahl der besagten IP-Pakete, welche eine solche Anforderung für das Ausführen einer Suche nach einem nicht existierenden Datenbasis-Element in der Datenbasis enthalten, einen vorbestimmten Grenzwert überschreitet.

4. Verfahren nach Anspruch 1, wobei der besagte Schritt des Ermittelns, dass ein Dienstverweigerungsangriff auf das besagte Zielopfer ausgeübt wird, das Ermitteln, dass eine Mehrzahl der besagten von der besagten einen oder von den besagten mehreren Quell-IP-Adressen empfangenen IP-Pakete vermutlich von einem Menschen stammende Anforderungen enthalten, umfasst, wobei die Empfangsrate der besagten Mehrzahl der besagten IP-Pakete, welche vermutlich von einem Menschen stammende Anforderungen enthalten, einen vorbestimmten Grenzwert überschreitet.

5. Verfahren nach Anspruch 1, wobei der besagte Schritt des Ermittelns, dass ein Dienstverweigerungsangriff auf das besagte Zielopfer ausgeübt wird, das Ermitteln, dass eine Mehrzahl der besagten von der besagten einen oder von den besagten mehreren Quell-IP-Adressen empfangenen IP-Pakete syntaktisch ungültige Anforderungen enthalten, umfasst, wobei die Empfangsrate der besagten Mehrzahl von IP-Paketen, welche syntaktisch ungültige Anforderungen enthalten, einen vorbestimmten Grenzwert überschreitet.

6. Verfahren nach Anspruch 1, wobei der besagte Schritt des Ermittelns, dass ein Dienstverweigerungsangriff auf das besagte Zielopfer ausgeübt wird, das Ermitteln, dass eine Mehrzahl der besagten von der besagten einen oder von den besagten mehreren Quell-IP-Adressen empfangenen IP-Pakete während sensiblen Vorgängen des besagten Zielopfers mit einer Rate, welche einen vorbestimmten Grenzwert überschreitet, empfangen werden, umfasst.

7. Verfahren nach Anspruch 1 wobei der besagte Schritt des Ermittelns, dass ein Dienstverweigerungsangriff auf das besagte Zielopfer ausgeübt wird, das Ermitteln, dass mindestens zwei Bedingungen eines vorbestimmten Satzes von Bedingungen erfüllt werden, umfasst, wobei der Satz von Bedingungen zwei oder mehr der folgenden Bedingungen umfasst:
Ermitteln, dass eine Paketrate der besagten von der besagten einen oder den besagten mehreren Quell-IP-Adressen empfangenen IP-Pakete einen vorbestimmten Grenzwert überschreitet;
Ermitteln, dass eine Mehrzahl der besagten von der besagten einen oder von den besagten mehreren Quell-IP-Adressen empfangenen IP-Pakete Anforderungen für das Ausführen einer Suche nach einem nicht existierenden Datenbasiselement in der Datenbasis enthalten, wobei eine Empfangsrate der besagten Mehrzahl der besagten IP-Pakete, welche solche Anforderungen für das Ausführen einer Suche nach einem nicht existierenden Datenbasiselement in der Datenbasis enthalten, einen vorbestimmten Grenzwert überschreitet;
Ermitteln, dass eine Mehrzahl der besagten von der besagten einen oder von den besagten mehreren Quell-IP-Adressen empfangenen IP-Pakete vermutlich von einem Menschen stammende Anforderungen enthalten, wobei eine Empfangsrate der besagten Mehrzahl der besagten IP-Pakete, welche vermutlich von einem Menschen stammende Anforderungen enthalten, einen vorbestimmten Grenzwert überschreitet;
Ermitteln, dass eine Mehrzahl der besagten von der besagten einen oder von den besagten mehreren Quell-IP-Adressen empfangenen IP-Pakete syntaktisch ungültige Anforderungen enthalten, wobei eine Empfangsrate der besagten Mehrzahl der besagten IP-Pakete, welche syntaktisch ungültige Anforderungen enthalten, einen vorbestimmten Grenzwert überschreitet; und
Ermitteln, dass eine Mehrzahl der besagten von der besagten einen oder von den besagten mehreren Quell-IP-Adressen empfangenen IP-Pakete während sensiblen Vorgängen des besagten Zielopfers mit einer Rate, welche einen vorbestimmten Grenzwert überschreitet, empfangen werden.

8. Verfahren nach Anspruch 1, wobei der besagte Schritt des Übertragens des besagten einen oder der besagten mehreren identifizierten IP-Adressenpaare an das besagte Trägernetzwerk das Übertragen des besagten einen oder der besagten mehreren identifizierten IP-Adressenpaare an das besagte Trägernetzwerk unter Verwendung einer Sicherheitssignatur umfasst.

9. Verfahren nach Anspruch 1, wobei der besagte Schritt des Übertragens des besagten einen oder der besagten mehreren identifizierten IP-Adressenpaare an das besagte Trägernetzwerk das Übertragen des besagten einen oder der besagten mehreren identifizierten IP-Adressenpaare an das besagte Trägernetzwerk unter Verwendung einer redundanten Verbindung zu dem besagten Trägernetzwerk umfasst.

10. Verfahren nach Anspruch 1, wobei der besagte Schritt des Übertragens des besagten einen oder der besagten mehreren identifizierten IP-Adressenpaare an das besagte Trägernetzwerk das Übertragen des besagten einen oder der besagten mehreren identifizierten IP-Adressenpaare an das besagte Trägernetzwerk unter Verwendung eines redundanten Kommunikationsprotokoll umfasst.

## Revendications

1. Procédé entièrement automatisé de défense contre les attaques par refus de service contre une victime ciblée (11), dans lequel un service est fourni à la victime ciblée par un réseau porteur (13) basé sur le protocole Internet (IP) qui transmet des paquets IP à celle-ci, la victime ciblée possédant une ou plusieurs adresses IP associées avec elle, le procédé comprenant les étapes suivantes :
Détermination (21) de la présence d'une attaque par refus de service perpétrée contre ladite victime ciblée en se basant sur une analyse des paquets IP reçus de la part d'une ou plusieurs adresses IP source, le procédé étant **CARACTÉRISE en ce qu'**il est mis en oeuvre au niveau de la victime ciblée et comprend en outre les étapes suivantes :
Identification (22) d'une ou plusieurs paires d'adresses IP, chacune desdites paires d'adresses IP comprenant une adresse IP source et une adresse IP destinataire, procédé dans lequel l'adresse IP source est l'une desdites adresses IP source de la part desquelles a été reçu l'un desdits paquets IP et dans lequel ladite adresse IP destinataire est l'une desdites adresses IP destinataire associées avec la victime ciblée ; et
Émission (17, 23) vers ledit réseau porteur desdites une ou plusieurs paires identifiées d'adresses IP pour permettre au réseau porteur de limiter la transmission des paquets IP ayant une adresse IP source et une adresse IP destinataire égales à l'adresse IP source et à l'adresse IP destinataire incluses dans l'une desdites paires identifiées d'adresses IP vers lesquelles a été effectuée la transmission.

2. Procédé selon la revendication 1, dans lequel ladite étape de détermination de la présence d'une attaque par refus de service perpétrée contre ladite victime ciblée comprend la détermination qu'un taux de paquets desdits paquets IP reçus de la part desdites une ou plusieurs adresses IP source dépasse un seuil prédéterminé.

3. Procédé selon la revendication 1, dans lequel ladite étape de détermination de la présence d'une attaque par refus de service perpétrée contre ladite victime ciblée comprend la détermination qu'une pluralité desdits paquets IP reçus de la part desdites une ou plusieurs adresses IP source comprend des demandes pour effectuer une recherche dans une base de données en vue de trouver un élément de base de données inexistant, procédé dans lequel un taux de réception de ladite pluralité desdits paquets IP qui comprennent de telles demandes pour effectuer une recherche dans une base de données en vue de trouver un élément de base de données inexistant dépasse un seuil prédéterminé.

4. Procédé selon la revendication 1, dans lequel ladite étape de détermination de la présence d'une attaque par refus de service perpétrée contre ladite victime ciblée comprend la détermination qu'une pluralité desdits paquets IP reçus de la part desdites une ou plusieurs adresses IP source comprend des demandes présentées comme provenant d'un être humain, procédé dans lequel un taux de réception de ladite pluralité desdits paquets IP qui comprennent des demandes présentées comme provenant d'un être humain dépasse un seuil prédéterminé.

5. Procédé selon la revendication 1, dans lequel ladite étape de détermination de la présence d'une attaque par refus de service perpétrée contre ladite victime ciblée comprend la détermination qu'une pluralité desdits paquets IP reçus de la part desdites une ou plusieurs adresses IP source comprend des demandes dont la syntaxe est invalide, procédé dans lequel un taux de réception de ladite pluralité desdits paquets IP qui comprennent des demandes dont la syntaxe est invalide dépasse un seuil prédéterminé.

6. Procédé selon la revendication 1, dans lequel ladite étape de détermination de la présence d'une attaque par refus de service perpétrée contre ladite victime ciblée comprend la détermination qu'une pluralité desdits paquets IP reçus de la part desdites une ou plusieurs adresses IP source est reçue pendant des opérations sensibles de ladite victime ciblée à un taux qui dépasse un seuil prédéterminé.

7. Procédé selon la revendication 1, dans lequel ladite étape de détermination de la présence d'une attaque par refus de service perpétrée contre ladite victime ciblée comprend la détermination qu'au moins deux d'un ensemble prédéterminé de conditions sont satisfaites, procédé dans lequel ledit ensemble de conditions comprend deux ou plusieurs des suivantes :
Détermination qu'un taux de paquets desdits paquets IP reçus de la part desdites une ou plusieurs adresses IP source dépasse un seuil prédéterminé ;
Détermination qu'une pluralité desdits paquets IP reçus de la part desdites une ou plusieurs adresses IP source comprend des demandes pour effectuer une recherche dans une base de données en vue de trouver un élément de base de données inexistant, procédé dans lequel un taux de réception de ladite pluralité desdits paquets IP qui comprennent de telles demandes pour effectuer une recherche dans une base de données en vue de trouver un élément de base de données inexistant dépasse un seuil prédéterminé ;
Détermination qu'une pluralité desdits paquets IP reçus de la part desdites une ou plusieurs adresses IP source comprend des demandes présentées comme provenant d'un être humain, procédé dans lequel un taux de réception de ladite pluralité desdits paquets IP qui comprennent des demandes présentées comme provenant d'un être humain dépasse un seuil prédéterminé ;
Détermination qu'une pluralité desdits paquets IP reçus de la part desdites une ou plusieurs adresses IP source comprend des demandes dont la syntaxe est invalide, procédé dans lequel un taux de réception de ladite pluralité desdits paquets IP qui comprennent des demandes dont la syntaxe est invalide dépasse un seuil prédéterminé ;
Détermination qu'une pluralité desdits paquets IP reçus de la part desdites une ou plusieurs adresses IP source est reçue pendant des opérations sensibles de ladite victime ciblée à un taux qui dépasse un seuil prédéterminé.

8. Procédé selon la revendication 1, dans lequel ladite étape d'émission vers ledit réseau porteur desdites une ou plusieurs paires identifiées d'adresses IP comprend l'émission desdites une ou plusieurs paires identifiées d'adresses IP vers ledit réseau porteur en utilisant une signature de sécurité.

9. Procédé selon la revendication 1, dans lequel ladite étape d'émission vers ledit réseau porteur desdites une ou plusieurs paires identifiées d'adresses IP comprend l'émission desdites une ou plusieurs paires identifiées d'adresses IP vers ledit réseau porteur en utilisant une connexion redondante vers ledit réseau porteur.

10. Procédé selon la revendication 1, dans lequel ladite étape d'émission vers ledit réseau porteur desdites une ou plusieurs paires identifiées d'adresses IP comprend l'émission desdites une ou plusieurs paires identifiées d'adresses IP vers ledit réseau porteur en utilisant un protocole de communication redondant.
